# EUROPÄISCHE PATENTSCHRIFT

(11) **EP 0 655 617 B1**
(45) Veröffentlichungstag und Bekanntmachung des Hinweises auf die Patenterteilung: **04.06.1997**
(21) Anmeldenummer: 94118601.7
(22) Anmeldetag: 25.11.1994
(51) Int. Cl.: G01M 17/007, G01L 3/14

(54) **Prüfstand für Fahrzeuge mit Drehmomentaufnehmer in einer Rolle**
Test bench for vehicles with torque transducer in a roller
Banc d'essai pour véhicules avec un capteur de couple dans un rouleau

(30) Priorität: 26.11.1993 US 157521
(43) Veröffentlichungstag der Anmeldung: 31.05.1995
(73) Patentinhaber: SCHENCK KOMEG GmbH, 66571 Eppelborn (DE)
(72) Erfinder: Smith, Calvert L., Lake Angelus, Michigan 48326 (US); Vogt, Christopher R., Rochester Hills, Michigan 48309 (US); Dadt, Hans Joachim, D-64646 Heppenheim (DE)
(74) Vertreter: Brandt, Ernst-Ulrich, Dipl.-Phys. Dipl.-Ing.

(56) Entgegenhaltungen:
- DE-A- 2 907 003
- US-A- 2 403 952
- US-A- 4 745 799

## Beschreibung

Diese Erfindung betrifft einen Prüfstand für das Prüfen von Fahrzeugen, der wenigstens eine Rolle, auf einer Rollenwelle besitzt, gemäß dem Oberbegriff des Patentanspruchs 1.

Prüfstände werden seit vielen Jahre in der Automobilindustrie eingesetzt, um Fahrzeuge stationär statt in Fahrversuchen zu testen. Derartige Fahrzeugprüfstände werden für verschiedene Prüfverfahren eingesetzt. Eine der Hauptanwendungen ist die Messung von Drehmoment und Leistung eines Fahrzeugs. Eine weitere Hauptanwendung ist die Simulation der Fahrmechanik und der Trägheitskräfte, die sich bei tatsächlichem Bewegen des Fahrzeugs auf der Straße ergeben. In beiden Anwendungen muß der Fahrzeugprüfstand in der Lage sein, mit hoher Genauigkeit das Rollendrehmoment zu messen.

In den letzten Jahren wurden die Abgasregelungen für den Umweltschutz und zur Bezineinsparung immer strikter. In den USA hat die Environmental Protection Agency (Amerikanische Umweltbehörde) Fahrzeugnormen erstellt, die für Simulationen im Rahmen der Fahrzeugprüfung hochtechnisierte Rollenprüfstände verlangen. In dieser Eigenschaft muß der Leistungsprüfstand die Kräfte simulieren, die auf die Antriebsräder des Fahrzeugs wirken, die auf einer Fahrbahn fahren. Während der Simulation muß das Fahrzeug auf den Rollen des Leistungsprüfstand laufen und Geschwindigkeit, Drehmoment, Beschleunigung und zurückgelegte Strecke über einen gewissen Zeitraum müssen so sein, als würde es in der gleichen Art und Weise auf der Straße gefahren.

Ein typischer Fahrzeugrollenprüfstand besteht aus mindestens einer Rolle, die in einem festen Rahmen drehbar eingebaut ist und die ein Antriebsrad des zu prüfenden Fahrzeugs trägt. Die Rolle hat normalerweise einen großen Durchmesser, der ein Mehrfaches dessen des Fahrzeugrades beträgt. Zwischen dem Fahrzeugrad und der Rolle besteht wegen der Zugkräfte des Rades eine Antriebsverbindung, so daß das Fahrzeug die Rolle treiben kann oder die Rolle das Fahrzeug, je nachdem, welche Prüfung durchgeführt wird. Der Leistungsprüfstand beinhaltet außerdem Geräte zur Simulierung der Fahrmechanik, die auf das Fahrzeugrad wirkt, sowie der Trägheitskräfte, die auf das Fahrzeug während der Beschleunigung und der Verzögerung wirken. Zur Fahrmechanik gehören die Rollreibung und der Luftwiderstand. Das Gerät zur Simulierung der Fahrmechanik beinhaltet einen Motor, der mit der Rolle über eine Rollenwelle verbunden ist, sowie einen Regler, der die Versorgung des Motors mit Energie je nach durchzuführender Simulation oder Prüfung regelt. Bei einigen Anlagen werden Schwungmassen mit der Rollenwelle verbunden, die die Trägheit simulieren. Der Motor des Leistungsprüfstands wird manchmal als Leistungsaustauschgerät bezeichnet, da er vom Fahrzeugrad über die Rolle sowohl Leistung aufbringen als auch aufnehmen kann. Der Motor arbeitet sowohl generatorisch als auch motorisch, wobei es sich z.B. um einen Gleichstrom- oder Wechselstrommotor handeln kann, mit einem entsprechenden elektronischen Regler mit Rechner.

Bei einem wie oben beschriebenen Leistungsprüfstand werden normalerweise die Geräte für die Messung der Drehmomentabgabe des Fahrzeugrades und der Radgeschwindigkeit mitgeliefert. Das Drehmoment wird durch einen Drehmomentaufnehmer gemessen, der mit dem Antriebsstrang des Leistungsprüfstandes verbunden ist, um ein Rollendrehmomentsignal an den Regler zu übertragen. Die Radgeschwindigkeit wird über einen Geschwindigkeits- oder Drehzahlgeber gemessen, der mit der Rollenwelle des Leistungsprüfstands entsprechend verbunden ist, um das Geschwindigkeitssignal an den Regler zu übertragen.

Ein altbekanntes Problem bei der Erzielung hoher Genauigkeiten in der Fahrzeugsimulation und -prüfung ist das der genauen Kompensation der Drehmomentmeßfehler, die aufgrund der Reibung in den Lagern der Rollenwelle durch die aufgebrachte Last und die Viskositätsreibung entstehen. Es ist bei Fahrzeugprüfständen allgemein üblich, den Drehmomentaufnehmer in der Antriebswelle zwischen Wellenlager und Motor einzubauen. In dieser Konstellation liefert der Drehmomentaufnehmer keine genauen Messungen des aufgebrachten oder aufgenommenen Drehmoments der Rolle, da die Messung vom Lagerdrehmoment beeinflußt wird. Beim bekannten Stand der Technik gab es Versuche, die Meßfehler, verursacht durch die Lagerreibung, zu kompensieren. Dieser bekannte Stand der Technik hat den Nachteil, daß die Drehmomentmeßfehler nicht genau kompensiert oder beseitigt werden und ein komplexes und kostenaufwendiges System erforderlich ist. Außerdem beeinflussen Änderung der Ölviskosität, der aufgebrachten Last und der Zugkräfte das Reibmoment der Lager.

Ein Leistungsprüfstand, der eine Kompensation für gewisse Verluste durch Reibung und Luftwiderstand bietet, ist im US-Patent 4,327,578 beschrieben, das am 4. Mai 1982 D'Angelo et al. erteilt wurde. Dieses Patent beschreibt einen Rollenprüfstand mit einem Rollensatz, der über eine Welle mit einem Motor und mit Schwungmassen verbunden ist, die auf der Welle zwischen dem Motor und dem Rollensatz angebracht sind. Ein Drehmomentaufnehmer zwischen dem Motor und den Schwungmassen überträgt ein Drehmomentsignal an einen Systemregler und ein Geschwindigkeitsaufnehmer auf der Welle überträgt ein Geschwindigkeitssignal an den Regler. Das System nutzt eine Gleichung zur Feststellung der tatsächlichen Kraftabgabe des Fahrzeugs, die eine Funktionsbeziehung darstellt, zwischen der Kraftablesung am Drehmomentaufnehmer, der gemessenen Steuergeschwindigkeit und der mechanischen Trägheit außerhalb des Drehmomentaufnehmerkreises. Das US-Patent 4,327,578 stellt fest, daß dadurch, daß die Kraft außerhalb des Drehmomentaufnehmerkreises bekannt ist, der Drehmomentaufnehmer frei zwischen den Schwungmassen und dem Gleichstrommotor positioniert werden kann, und es möglich wird, daß der Drehmomentaufnehmer direkt an den Rollen oder direkt am Fahrzeug selbst befestigt werden kann.

Im US-Patent 4,327,578 wird darauf hingewiesen, daß der Kriechstromverlust durch Reibung und Luftwiderstand vom Drehmomentensignal abgezogen wird, wenn das Signal aufbereitet ist. Insbesondere bezieht sich das Patent auf die Kompensation von Reibung und Luftwiderstand bei Kriechstromverlusten im Gleichstrommotor durch Hinzufügung gewisser Faktoren zum berechneten Kraftsignal, um ein kompensiertes Kraftsignal zu erhalten, das an den Stromrichter übertragen wird, um den Ankerstrom zum Gleichstrommotor zu steuern. Gemäß diesem bekannten Stand der Technik ist es bekannt, wie das Kraft- oder Drehmomentsignal kompensiert werden kann, um gewisse Fehler aufgrund von Reibung und Luftwiderstand im System zu erklären.

Ein Rollenprüfstand, der mit reibungskompensierten Lagern an der Rollenwelle ausgestattet ist, ist beschrieben im SAE Papier 9302391 vom 1.-5. März 1993 unter dem Titel "Großer Rollenprüfstand mit AC Flux Vector PEU und reibungskompensierten Lagern". Bei diesem Leistungsprüfstand ist die Lagerreibung der Rollen dadurch mechanisch kompensiert, daß ein Laufringträger zwischen dem inneren und dem äußeren Ring vorhanden ist, der von einem Motor auf die gleiche Geschwindigkeit gebracht wird, die die Rollenwelle hat. Dieses mit Motor versehene Lager ist so konstruiert, daß die Auswirkung der Lagerreibung aufgehoben wird, die ein Drehmoment erzeugen würde, das von dem Drehmomentaufnehmer erfaßt würde und das nicht von dem Drehmoment zu unterscheiden wäre, das durch die Fahrzeugreifen aufgebracht wird.

Der Erfindung liegt deshalb die Aufgabe zugrunde, einen Prüfstand der eingangs genannten Art so zu verbessern, daß dessen Meßergebnisse eine höhere Meßgenauigkeit ausweisen.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß bei diesem Rollenprüfstand die Ungenauigkeiten bei der Messung der Rollendrehmomente aufgrund von Lagerreibung beseitig werden. Dies wird erreicht durch den Anschluß eines Drehmomentaufnehmers im Antriebsstrang der Rolle an einer Stelle, die außerhalb der Rollenlager liegt, so daß das Drehmomentsignal nicht von der Lagerreibung beeinflußt wird.

Bei einer besonderen Ausführungsart ist ein Rollenprüfstand in vorteilhafter Weise mit einem Drehmomentaufnehmer versehen, der ein Drehmomentsignal als Reaktion auf das Drehmoment erzeugt, das zwischen der Rollenfelge und einer Stelle auf der Rollenwelle zwischen Felge und Wellenlager übertragen wird. Der momentaufnehmer besteht aus einem Drehmomentübertragungsteil und einem Abtastteil für das Generieren eines Drehmomentensignals, wobei das Drehmomentübertragungsteil angeschlossen ist, um Drehmomente im Antriebsstrang zwischen der Felge der Rolle und der genannten Position auf der Rollenwelle zu übertragen.

Die Erfindung wird anhand von Ausführungsbeispielen, näher erläutert. Es zeigen:
- Fig. 1:: einen Rollenprüfstand mit einseitigem Motor und einer Rolle, an der ein Drehmomentaufnehmer angebracht ist;
- Fig. 2:: einen Rollenprüfstand mit einseitigem Motor und zwei Rollen, an denen ein Drehmomentaufnehmer angebracht ist;
- Fig. 3:: zeigt einen Rollenprüfstand mit doppelseitigem Motor und zwei Rollen, an denen ein Drehmomentaufnehmer angebracht ist;
- Fig. 4:: ein Blockdiagramm eines Fahrzeugprüfstandes, der einen Drehmomentregelkreis besitzt;
- Fig. 5:: eine schematische Darstellung der mechanischen Verbindung des Drehmomentaufnehmers im Antriebsstrang der Rolle im Verhältnis zu den Wellenlagern der Rolle;
- Fig. 6:: ein Aufriss, teilweise als Schnitt, eines Fahrzeugprüfstandes mit einem ersten Anwendungsbeispiel des in der Rolle eingebauten Drehmomentaufnehmers;
- Fig. 7:: eine Seitenansicht des Fahrzeugprüfstandes aus Fig. 6;
- Fig. 8:: eine vergrößerte Ansicht des Drehmomentaufnehmers des Fahrzeugprüfstandes aus Fig. 6 und 7,
- Fig. 9:: eine Ansicht, die der Verbindungslinie 9-9 der Fig. 8 entspricht;
- Fig. 10:: ein Aufriss, teilweise als Schnitt, eines Fahrzeugprüfstandes mit einem zweiten Anwendungsbeispiel des in der Rolle eingebauten Drehmomentaufnehmers;
- Fig. 11:: ein Seitenaufriss des Fahrzeugprüfstandes aus Fig. 10;
- Fig. 12:: eine Vergrößerung, die den Drehmomentaufnehmer des Fahrzeugprüfstandes aus Fig. 10 und 11 zeigt.
- Fig. 13:: eine Ansicht, die der Verbindungslinie 13-13 der Fig. 12 entspricht;
- Fig. 14:: ein Aufriss, teilweise als Schnitt, eines Fahrzeugprüfstandes mit einem dritten Anwendungsbeispiel des in der Rolle eingebauten Drehmomentaufnehmers;
- Fig. 15:: ein Seitenaufriss des Fahrzeugprüfstandes aus Fig. 14;
- Fig. 16:: ein Aufriss, teilweise als Schnitt, eines Fahrzeugprüfstandes mit einem vierten Anwendungsbeispiel des in der Rolle eingebauten Drehmomentaufnehmers;
- Fig. 17:: ein Seitenaufriss des Fahrzeugprüfstandes aus Fig. 16;
- Fig. 18:: eine Vergrößerung mit Details des Drehmomentaufnehmers des Fahrzeugprüfstandes von Fig. 16 und 17;
Die Zeichnung zeigt Ausführungsbeispiele der Erfindung, bei denen in einem Rollenprüfstand mit einem Drehmomentaufnehmer im Antriebsstrang der Rolle, der Drehmomentaufnehmer außerhalb des Wellenlagers der Rolle angeordnet ist. Dabei ist zur Erzeugung eines Drehmomentensignals als Reaktion auf das Drehmoment im Antriebsstrang, der Drehmomentaufnehmer zwischen der Rollenfelge und einer Stelle auf der Welle zwischen der Felge und dem Lager vorgesehen.

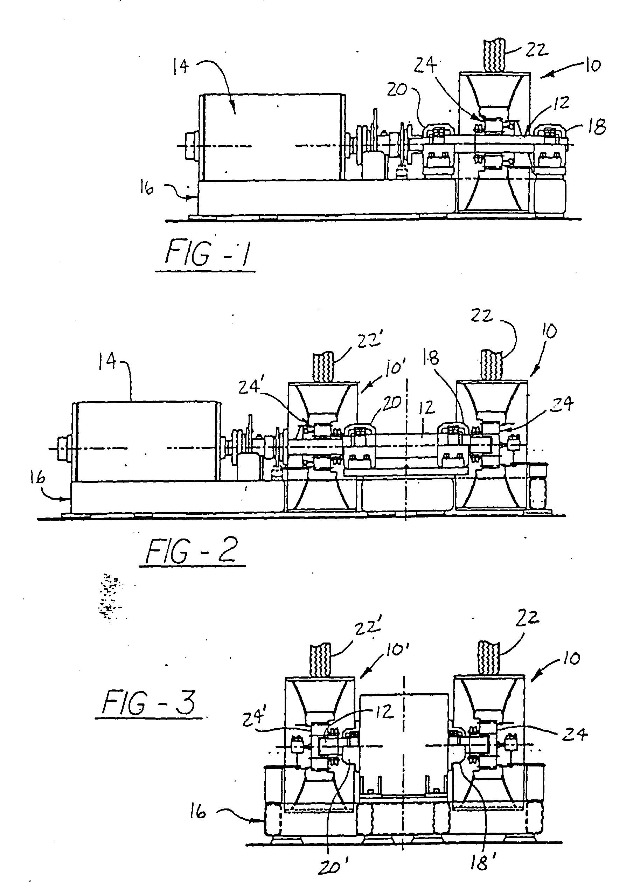

Die Fig. 1, 2 und 3 der Zeichnung zeigen verschiedene Konfigurationen von Rollenprüfständen, die typisch sind für die, in denen die Erfindung eingesetzt werden kann. Fig. 1 zeigt einen Rollenprüfstand mit einseitigem Motor und mit einer Rolle. Er umfaßt im allgemeinem eine Rolle 10, die auf einer Rollenwelle 12 montiert ist, die an einen Motor 14 gekoppelt ist, der seinerseits von einem festen Rahmen 16 getragen wird. Die Rolle 10 ist auf der Welle 12 montiert, mit der sie dreht, und die Welle stützt sich über zwei Lager 18, 20 drehbar auf den Rahmen 16. Ein Rad 22 des zu prüfenden Fahrzeugs steht auf der Rolle 10 in Antriebsverbindung. Das Drehmoment wird zwischen dem angetriebenen Rad 22 des Fahrzeugs und dem Motor 14 über die Rolle 10 und die Welle 12 übertragen. Ein Drehmomentaufnehmer 24 ist in der Rolle 10 eingebaut, der die Zugkraft des angetriebenen Rades 22 des Fahrzeugs mißt.

Fig. 2 zeigt einen Rollenprüfstand mit einseitigem Motor und mit zwei Rollen. Er umfaßt im allgemeinem ein Paar Rollen 10, 10', die auf einer gemeinsamen Welle 12 montiert sind und an einen Motor 14 gekoppelt ist. Der Motor ist auf einem festen Rahmen 16 montiert und die Welle 12 stützt sich über zwei Lager 18, 20 auf den Rahmen. Die beiden Antriebsräder 22, 22' des Fahrzeugs stehen auf den Rollen 10, 10' in Antriebsverbindung. Ein Drehmomentaufnehmer 24 ist in der einen Rolle 10 eingebaut, während ein weiterer Drehmomentaufnehmer 24' in der anderen Rolle 10' eingebaut ist. Dies ermöglicht die Messung des Rollendrehmoments an jeder Rolle.

Fig. 3 zeigt einen Rollenprüfstand mit doppelseitigem Motor und zwei Rollen. Der Motor 14' stützt sich auf den Rahmen 16' zwischen der einen Rolle 10 und der anderen Rolle 10' ab. Die eine Rolle 10 stützt sich auf das eine Ende der Motorwelle 12' und die andere Rolle 10' stützt sich auf das andere Ende der Motorwelle ab. Die Welle 12' ist drehbar in den Lagern 18', 20' gelagert. Zwei Antriebsräder 22, 22' stützen sich jeweils auf die in Antriebsverbindung stehenden Rollen 10, 10' ab. Ein Drehmomentaufnehmer 24 ist in der einen Rolle 10 eingebaut, während ein anderer Drehmomentaufnehmer 24' in der anderen Rolle 10' eingebaut ist.

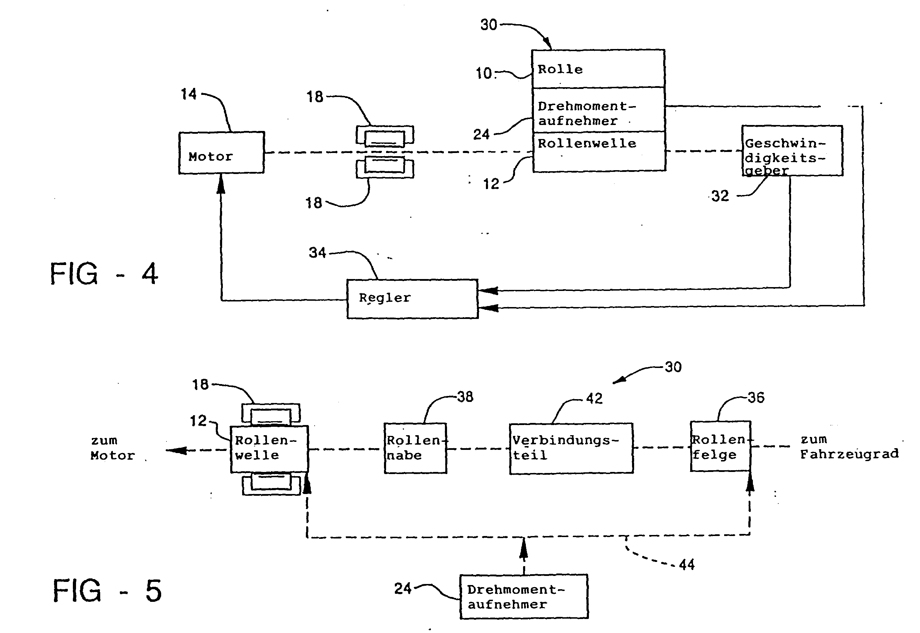

Ein Prüfstand gemäß dieser Erfindung ist als Blockdiagramm in Fig. 4 der Zeichnung dargestellt. Zum Rollenantriebsstrang 30 gehören eine Rolle 10, eine Welle 12 und ein Drehmomentaufnehmer 24. Der Rollenantriebsstrang ist, wie die gestrichelte Linie zeigt, mechanisch mit dem Motor 14 verbunden, und wird zur Drehung in Lagern 18 gestützt. Ein Geschwindigkeitssignal vom Geschwindigkeitsgeber 32 und ein Drehmomentsignal vom Drehmomentaufnehmer werden als Eingabe an einen Regler übertragen, der die Stromversorgung des Motors 14 regelt.

Der Antriebsstrang der Rolle 30 wird in Fig. 5 der Zeichnung in Diagrammform dargestellt. Wie oben beschrieben, umfaßt der Rollenantriebsstrang 30 die Rolle 10, die Rollenwelle 12 und den Drehmomentaufnehmer 24. Zum Antriebsstrang der Rolle 10 gehören die Rollenfelge 36, die als Antrieb mit dem Fahrzeugrad verbunden ist und die Rollennabe 38, die als Antrieb mit der Rollenwelle 12 verbunden ist. Innerhalb der Rolle sind die Rollenfelge 36 und die Rollennabe 38 als Antrieb über ein Verbindungselement 42 verbunden, das jede Form annehmen kann, die für die Übertragung des Drehmoments zwischen Felge und Nabe geeignet ist. Der Rollenantriebsstrang 30 reicht von der Rollenfelge 36 bis zur Rollenwelle 12. Zum Rollenantriebsstrang 30 gehört der Drehmomentaufnehmer 24, dessen Drehmomentübertragungsteil sich im Antriebsstrang 30 an einer ausgewählten Stelle zwischen der Zugoberfläche der Felge 36 und dem Lager 18 befindet. Der Bereich ausgewählter Stellen für das Anbringen des Drehmomentaufnehmers ist in Fig. 5 durch die gestrichelte Linie 44 gekennzeichnet. Die Positionierung des Drehmomentaufnehmers 30 an ausgewählten Stellen ist nachstehend beschrieben, mit Bezugnahme auf das besondere Ausführungsbeispiel der Erfindung.

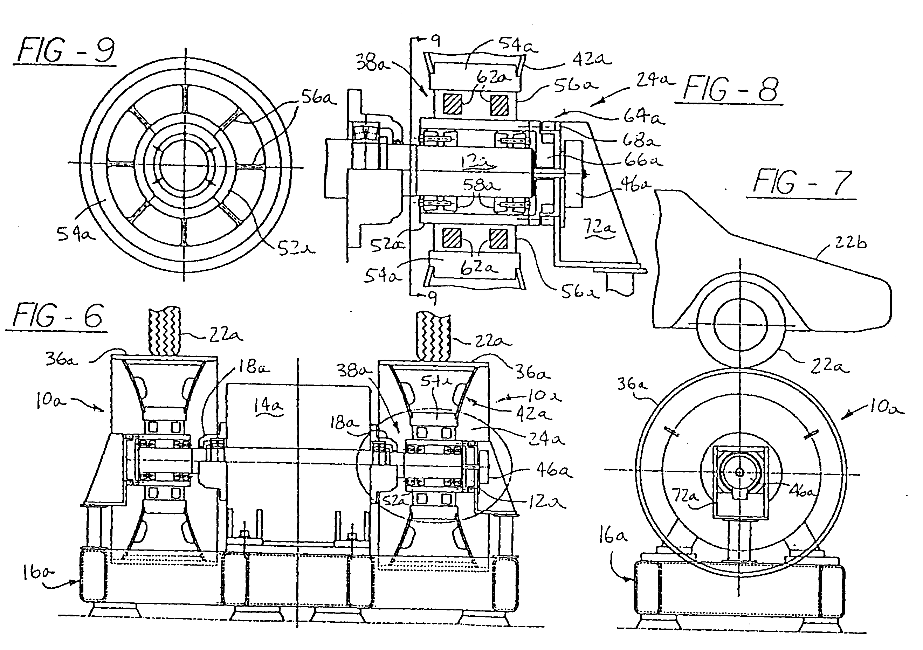

Ein erstes Anwendungsbeispiel der Erfindung ist in den Fig. 6 bis 9 der Zeichnung dargestellt. Dieses umfaßt einen Prüfstand mit doppelseitigem Motor und mit zwei Rollen. Der Motor 14a ist auf dem festen Rahmen 16a montiert. Die Motorwelle ist doppelseitig und stellt die Rollenwelle 12a dar, die in Lagern 18a an den beiden Enden des Motors aufliegt. Die Welle 12a trägt die beiden Rollen 10a, die identisch sind, an den beiden äußeren Enden der Welle. Ein auf dem Prüfstand zu prüfendes Fahrzeug 22b hat zwei Antriebsräder 22a, die auf den beiden entsprechenden Rollen 10a stehen.

Da die beiden Rollen 10a gleich konstruiert sind, wird nachfolgend nur die Rolle 10a am rechten Ende der Welle 12a (wie in Fig. 6 gezeigt) genau beschrieben. Zur Rolle 10a gehören im allgemeinen eine Rollenfelge 36a, eine Rollennabe 38a und ein ringförmiges Verbindungsteil 42a, das Felge 36a und Nabe 38a in einer Drehmomentübertragung verbindet. Ein Drehmomentaufnehmer 24a, der nachfolgend genau beschrieben wird, ist in die Nabe 38a eingebaut. Ein Geschwindigkeitsgeber 46a ist an einem Ende der Rollenwelle 12a angebaut.

Die Nabe 38a und der in der Nabe eingebaute Drehmomentaufnehmer wird beschrieben im Hinblick auf die vergrößerte Darstellung in den Fig. 8 und 9. Zur Nabe 38a gehören eine zylindrische Buchse 52a und ein koaxialer, radial geteilter zylindrischer Ring 54a, die verbunden sind durch eine Vielzahl von radial verlaufenden Flachspeichen 56a, die alle von einer Bauart sein können. Die Nabe 38a ist fest auf der Welle 12a mit einem Paar ringförmiger Keilklammern 58a befestigt, die zwischen dem Innendurchmesser der Buchse 52a und der Welle 12a angebracht sind. Das Verbindungsteil 42a verbindet die Nabe 38a mit dem Ring 54a der Rolle.

Zum Drehmomentaufnehmer 24a gehört ein Drehmomentübertragungsteil und ein Abtastteil. Das Drehmomentübertragungsteil besteht aus den Speichen 56a, und das Abtastteil besteht aus Dehnungsmeßstreifen 62a, die auf einer oder mehrerer der Speichen angebracht sind. Die Speichen sind genügend verdrehnachgiebig, um eine meßbare Dehnung zu ermöglichen, sie sind aber im wesentlichen biegesteif in radialer Richtung und in Bezug auf seitliche Biegemomente. Die von den Dehnungsmeßstreifen 62a erzeugten elektrischen Signale werden über Drähte (nicht gezeigt) und ein berührungsloses Signalverbindungsgerät 64a und dann durch Drähte (nicht gezeigt) an den Regler 34 geleitet. Zum Verbindungsgerät gehören ein bewegliches Verbindungsteil 66a und ein festes Verbindungsteil 68a. Das bewegliche Verbindungsteil 66a ist auf dem Ende der Buchse 52a montiert und rotiert mit ihr. Das feste Verbindungsteil 68a ist kreisförmig und ist auf einer festen Trägerkonsole 72a montiert. Das Signalverbindungsgerät 64a ist zweckmäßigerweise ein Drehwandler eines bekannten Types, wie z.B. einer gemäß dem US-Patent 4,412,198, das am 25. Oktober 1983 erteilt wurde.

In diesem ersten Anwendungsbeispiel und in jedem der nachstehend beschriebenen zweiten, dritten, und vierten Anwendungsbeispiele sind die Dehnungsmeßstreifen in bekannter Weise so angebracht und verbunden, daß die Signale, die von den Dehnungsmeßstreifen 62a ausgehen, so verarbeitbar sind, daß sich gegenseitige Beeinflussungen und Fremdlastsignalkomponenten aufheben, um dadurch eine genaue Messung des durch die Rolle übertragenen Drehmoments zu erzielen.

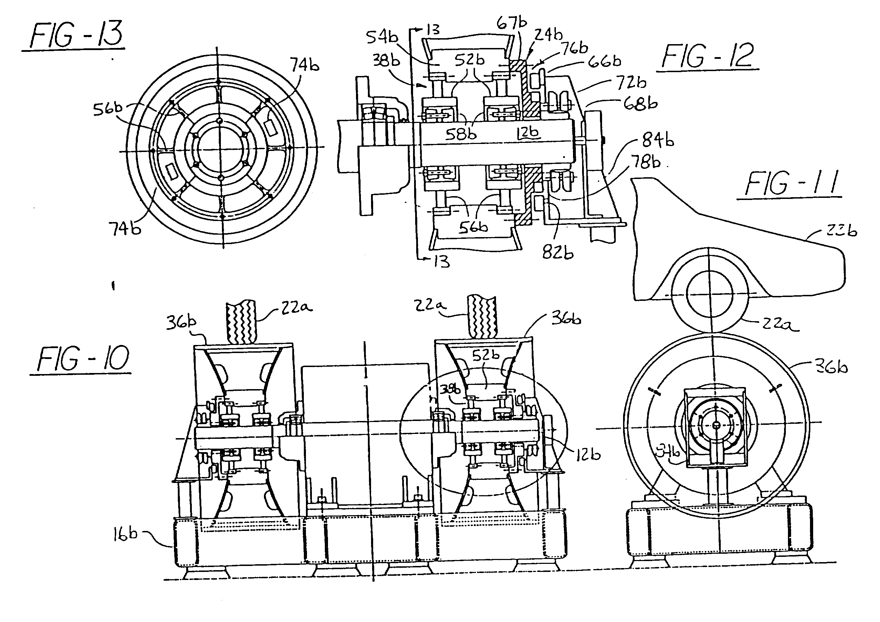

Ein zweites Ausführungsbeispiel der Erfindung ist in den Fig. 10 bis 13 der Zeichnung dargestellt. Dabei ist dieses anhand desselben Prüfstandes dargestellt wie bei dem ersten Anwendungsbeispiel mit Ausnahme der Nabe 38b und dem Drehmomentaufnehmer 24b, die nachfolgend beschrieben werden.

Die Teile des Prüfstandes, die denen des ersten Anwendungsbeispiels entsprechen, werden mit derselben Bezugsnummer gekennzeichnet, sie haben jedoch die Bezeichnung "b" statt "a".

Zur Nabe 38b gehören ein Paar axial geteilter zylindrische Buchsen 52a und ein äußerer koaxialer zylindrischer Ring 54b. Jede der zylindrischen Buchsen 52b ist mit einem Ring 54b durch eine Vielzahl von Speichen 56b verbunden, die das Drehmoment übertragen. Die Speichen 36b sind unitär mit den Buchsen 52b und mit dem Ring 54b verbunden. Jede der Buchsen 52b ist drehfest auf der Welle 12b mit einem Paar ringförmiger Keilklammern 58b befestigt. Die Nabe 38b stellt für die Rolle eine Stützfedermontage auf der Welle dar, die in allen Freiheitsgraden fest ist, außer daß sie verwindungsnachgiebig ist.

Zum Drehmomentaufnehmer 24b gehört ein Drehmomentübertragungsteil und ein Abtastteil; das Drehmomentübertragungsteil 66b ist scheibenförmig und hat seitlich um seinen Kreisumfang vorstehende Flansche 67b zur Verbindung mit dem Ring 54b der Nabe 38b. Das Drehmomentübertragungsteil 66b hat in der Mitte eine Öffnung, die das Durchschieben der Welle 12b ermöglicht. Das Drehmomentübertragungsteil 66b ist mit der Welle 12b zur Drehung durch einen Wellenbund 68b verbunden, der auf der Welle durch einen ringförmigen Spannring 72b gesichert ist. Das momentübertragungsteil 66b ist so ausgebildet, daß ein vorbestimmter Teil des Drehmoments zwischen dem Ring 54b und der Welle 12b übertragen wird. Das Abtastteil umfaßt Mehrfachdehnungsstreifen 74b, die auf dem Drehmomentübertragungsteil 66b montiert sind. Die von den Dehnungsmeßstreifen 74b erzeugten elektrischen Signale werden über Drähte (nicht gezeigt) und ein berührungsloses Signalverbindungsgerät 76b und dann durch Drähte (nicht gezeigt) an den Regler 34 geleitet. Zum Verbindungsgerät gehören ein bewegliches Verbindungsteil 78b und ein festes Verbindungsteil 82b. Das bewegliche Verbindungsteil 78b ist auf dem Drehmomentübertragungsteil 66b montiert und rotiert mit diesem. Das feste Verbindungsteil 82b ist kreisförmig und auf einer festen Trägerkonsole 84b montiert.

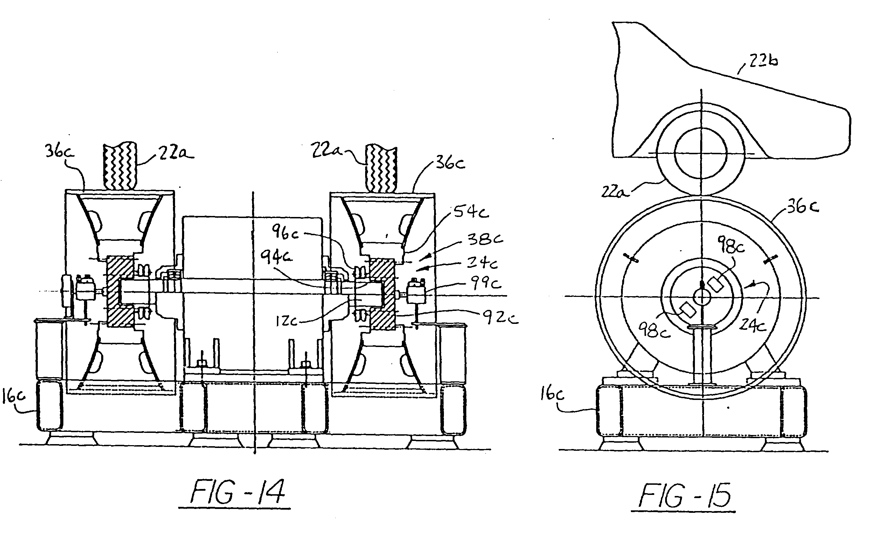

Ein drittes Ausführungsbeispiel der Erfindung ist in den Fig. 14 bis 15 der Zeichnung dargestellt. Dabei ist es anhand desselben Prüfstandes dargestellt wie beim ersten Anwendungsbeispiel, mit Ausnahme der Nabe 38c und dem Drehmomentaufnehmer 24c, die nachfolgend näher beschrieben werden. Die Teile des Prüfstandes, die denen des ersten Anwendungsbeispiels entsprechen, werden mit derselben Bezugsnummer gekennzeichnet, sie haben jedoch die Bezeichnung "c" statt "a".

Zur Nabe 38c gehören ein Nabenring 54c und ein Drehmomentaufnehmer 24c. Zum Drehmomentaufnehmer 24c gehört das übertragungsteil 92c, das zylindrisch ausgeführt ist und am Ende der Welle 12c koaxialer montiert ist, um mit der Welle zu drehen. Der Kreisumfang des Drehmomentaufnehmers 92c ist mit dem koaxialen Ring 54c verbunden. Das Drehmomentübertragungsteil 92c ist fest auf der Welle 12c mit einem Wellenbund 94c montiert, der mit Schrauben gesichert ist (nicht gezeigt) und der auf der Welle fest mit einer ringförmigen Keilklammer 96c befestigt ist. Das Drehmomentübertragungsteil könnte an der Welle 12c ebenfalls mit einer Konuswellenverbindung befestigt werden, wobei sich der Außenkonus auf der Welle 12c und der Innenkonus im Drehmomentaufnehmer 92c befindet.

Zum Drehomentaufnehmer 24c gehört auch ein Abtastteil mit Dehnungsmeßstreifen 98c. Die von den Dehnungsmeßstreifen 98c erzeugten elektrischen Signale werden über ein berührungsloses Signalverbindungsgerät 99c an den Regler 34 geleitet, wie bereits beschrieben.

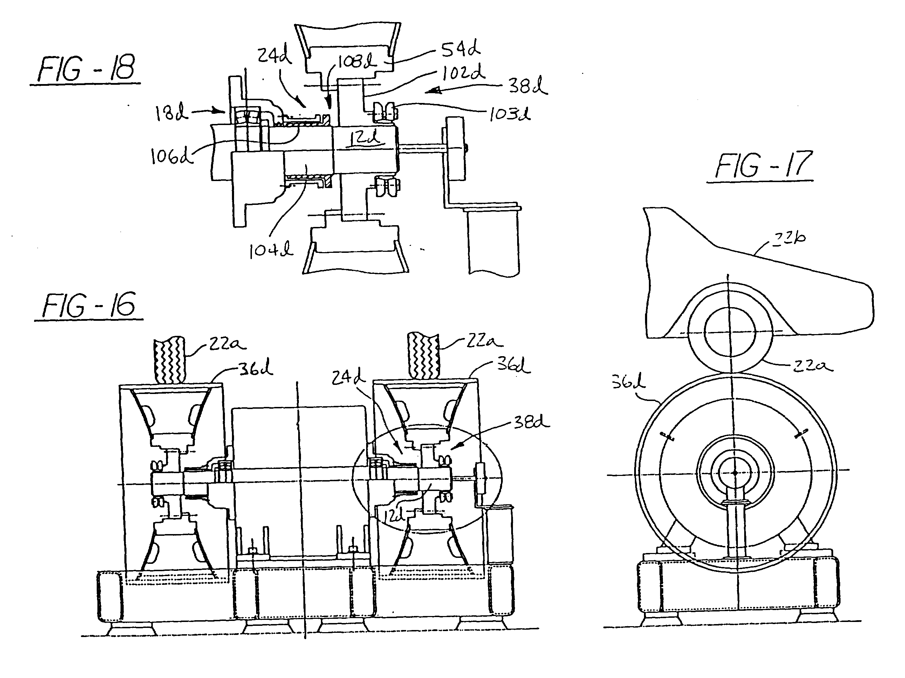

Ein viertes Ausführungsbeispiel der Erfindung ist in den Fig. 16, 17 und 18 der Zeichnung dargestellt. Dabei ist es anhand desselben Prüfstandes dargestellt wie beim ersten Anwendungsbeispiel, mit Ausnahme der Nabe 38d und dem Drehmomentaufnehmer 24d, die jetzt beschrieben werden. Die Teile des Prüfstandes, die denen des ersten Anwendungsbeispiel entsprechen, werden mit derselben Bezugsnummer gekennzeichnet, sie haben jedoch die Bezeichnung "d" statt "a".

Zur Nabe 38d gehören ein zylindrisches Teil 102d, das koaxial auf der Welle 12d montiert ist, um mit ihr zu drehen, außerdem ein Koaxialring 54d, der am Kreisumfang des zylindrischen Teils 102d gesichert ist. Das zylindrische Teil 102d ist auf der Welle 12d durch eine ringförmige Keilklammer 103d gesichert.

Zum Drehmomentaufnehmer 24d gehört ein Drehmomentübertragungsteil und ein Abtastteil. Das Drehmomentübertragungsteil besteht aus einem Teil 104d der Welle 12d. Das Teil 104d der Welle ist in der Nähe aber außerhalb des Lagers 18d, wobei seine effektive Länge der effektiven Länge des Abtastteils entspricht. Zum Abtastteil gehört eine Buchse 106d, die die Welle umschließt, und die an beiden Seiten gesichert ist. Die Buchse ist mit einem oder mehreren Dehnungsmeßstreifen (nicht gezeigt) versehen, die zum Abtasten in der Welle gesichert sind. Die Buchse ist mit der Welle verdrehbar, gemäß dem von der Welle übertragenen Drehmoment. Die von den Dehnungsmeßstreifen erzeugten elektrischen Signale werden über ein berührungsloses Signalverbindungsgerät 108d an den Regler 34 geleitet, wie bereits beschrieben.

Bei den beschriebenen Fahrzeugprüfständen wurden die Meßungenauigkeiten beim Rollendrehmoment aufgrund von Lagerreibung beseitigt. Die einzige Meßungenauigkeit beim Drehmoment, die weiterhin besteht, ist der Rollenluftwiderstand, der durch den Drehmomentaufnehmer bei verschiedenen konstanten Drehgeschwindigkeiten der Rolle ohne Fahrzeug genau gemessen werden kann und der dann mit Hilfe der Steuerungssoftware kompensiert wird (wobei Beschleunigungs- und Verzögerungsdrehmomente beseitigt werden).

## Patentansprüche

1. Prüfstand für das Prüfen von Fahrzeugen, der wenigstens eine Rolle (10) auf einer Rollenwelle (12) besitzt, die zusammen drehbar sind, wobei die Welle (12) in einem Lager (18, 20) angeordnet ist, das von einem Rahmen (16) getragen wird, und bei dem die Rolle (10) aus einer Rollennabe (38) und einer Rollenfelge (36) besteht, die mit einem Verbindungsteil (42) dazwischen verbunden sind, und die Rollennabe (38) an der Rollenwelle (12) befestigt ist, wobei die Rollenfelge (36) für das Tragen eines Fahrzeugrades (22) vorgesehen ist und für eine Antriebsverbindung zwischen dem Fahrzeugrad (22) und der Rollenfelge (36), und bei dem eine elektrische Maschine (14) vorgesehen ist, die mit der Rollenwelle (12) verbunden ist und mit einem Regelkreis (34) versehen ist, der die von der Maschine (14) aufzubringende oder aufzunehmende Leistung regelt, dadurch gekennzeichnet, daß zwischen der Rollenfelge (36) und einer Position auf der Welle (12) zwischen der Rollenfelge (36) und dem Lager (18, 20), ein Drehmomentaufnehmer (24) angeordnet ist, der ein zwischen der Welle (12) und der Felge (36) auftretendes Drehmomentsignal erzeugt.

2. Prüfstand nach Anspruch 1, dadurch gekennzeichnet, daß zu dem Drehmomentaufnehmer (24) ein Drehmomentübertragungsteil (92) und ein Abtastteil (62, 74, 98) gehört, wobei das Drehmomentübertragungsteil (92) zur Übertragung des Drehmoments zwischen der Rollenfelge (36) und einer Position auf der Welle (12) zwischen der Rollenfelge (36) und dem Lager (18, 20) angeordnet ist, und das Abtastteil (62, 74, 98) mit dem Regler (34) verbunden ist.

3. Prüfstand nach Anspruch 2, dadurch gekennzeichnet, daß das Verbindungsteil (42) das Drehmomentübertragungsteil (92) beinhaltet, während zu dem Drehmomentübertragungsteil (92) eine Reihe von Speichen (56) gehören.

4. Prüfstand nach Anspruch 3, dadurch gekennzeichnet, daß jede der genannten Speichen (56) in Umfangsrichtung verdrehnachgiebig ist, während diese beim Antrieb der Rolle (10) durch ein Fahrzeugrad (22) in axialer und koaxialer Richtung im wesentlichen biegesteif sind.

5. Prüfstand nach Anspruch 4, dadurch gekennzeichnet, daß zu dem Abtastteil wenigstens ein Dehnungsmeßstreifen (62) gehört, der auf einer der Speichen (56) angebracht ist.

6. Prüfstand nach Anspruch 4, dadurch gekennzeichnet, daß zu dem Abtastteil (62) ein Weggeber gehört, der Winkelverschiebungen zwischen den äußeren Enden der Speichen (56) und der Welle (12) erfaßt.

7. Prüfstand nach Anspruch 2, dadurch gekennzeichnet, daß zu dem Drehmomentübertragungsteil (92) eine Teil (104d) der Welle (12d) zwischen der Nabe (38) und dem Lager (18, 20) gehört.

8. Prüfstand nach Anspruch 7, dadurch gekennzeichnet, daß das Abtastteil ein Weggeber ist, der die Winkelverschiebung zwischen den Enden des Teils (104d) der Welle (12d) erfaßt.

9. Prüfstand nach Anspruch 7, dadurch gekennzeichnet, daß zu dem Abtastteil wenigstens ein Dehnungsmeßstreifen gehört, der auf dem Teil (104d) der Welle (12d) montiert ist.

10. Prüfstand nach Anspruch 2, dadurch gekennzeichnet, daß das Drehmomentübertragungsteil (92) zwischen der Rollennabe (38) und der Welle (12) befestigt ist.

## Claims

1. Test bed for testing vehicles, which has at least one roller (10) on a roller shaft (12) which are rotatable together, the shaft (12) being disposed in a bearing (18, 20) which is carried by a frame (16), and in which the roller (10) comprises a roller hub (38) and a roller rim (36), which are connected to a connection part (42) therebetween, and the roller hub (38) is fastened to the roller shaft (12), the roller rim (36) being provided for carrying a vehicle wheel (22) and for a drive connection between the vehicle wheel (22) and the roller rim (36), and in which an electrical machine (14) is provided, which is connected to the roller shaft (12) and is provided with a control loop (34) which controls the power to be applied or taken up by the machine (14), characterized in that disposed between the roller rim (36) and a position on the shaft (12) between the roller rim (36) and the bearing (18, 20) is a torque pick-up (24) which produces a torque signal arising between the shaft (12) and the rim (36).

2. Test bed according to claim 1, characterized in that the torque pick-up (24) comprises a torque-transmitting part (92) and a pick-up part (62, 74, 98), the torque-transmitting part (92) being disposed for transmission of the torque between the roller rim (36) and a position on the shaft (12) between the roller rim (36) and the bearing (18, 20), and the pick-up part (62, 74, 98) being connected to the controller (34).

3. Test bed according to claim 2, characterized in that the connection part (42) comprises the torque-transmitting part (92), while the torque-transmitting part (92) comprises a series of spokes (56).

4. Test bed according to claim 3, characterized in that each of said spokes (56) is torsionally flexible in a peripheral direction while said spokes, upon driving of the roller (10) by a vehicle wheel (22), are substantially flexurally rigid in an axial and coaxial direction.

5. Test bed according to claim 4, characterized in that the pick-up part comprises at least one strain gauge (62) which is provided on one of the spokes (56).

6. Test bed according to claim 4, characterized in that the pick-up part (62) comprises a path sensor which detects angular displacements between the outer ends of the spokes (56) and the shaft (12).

7. Test bed according to claim 2, characterized in that the torque-transmitting part (92) comprises a part (104d) of the shaft (12d) between the hub (38) and the bearing (18, 20).

8. Test bed according to claim 7, characterized in that the pick-up part is a path sensor which detects the angular displacement between the ends of the part (104d) of the shaft (12d).

9. Test bed according to claim 7, characterized in that the pick-up part comprises at least one strain gauge which is mounted on the part (104d) of the shaft (12d).

10. Test bed according to claim 2, characterized in that the torque-transmitting part (92) is fastened between the roller hub (38) and the shaft (12).

## Revendications

1. Banc d'essai pour le contrôle de véhicules qui possède au moins un rouleau (10) sur un arbre de rouleau (12), qui peuvent tourner ensemble, l'arbre (12) étant placé dans un palier (18, 20), qui est porté par un cadre (16), et dans lequel le rouleau (10) est constitué d'un moyeu (38) et d'une jante (36), qui sont assemblés avec un élément de liaison (42) placé entre eux, et le moyeu (38) est fixé sur l'arbre de rouleau (12), la jante (36) étant prévue pour porter une roue (22) du véhicule et pour une liaison d'entraînement entre la roue (22) du véhicule et la jante (36) du rouleau, et dans lequel est prévue une machine électrique (14), qui est reliée à l'arbre de rouleau (12) et est pourvue d'un circuit de régulation (34), qui règle la puissance à fournir ou à absorber par la machine (14), caractérisé en ce qu'entre la jante (36) du rouleau et une position sur l'arbre (12), entre la jante (36) et le palier (18, 20), est placé un capteur de couple de rotation (24), qui produit un signal de couple de rotation, se produisant entre l'arbre (12) et la jante (36).

2. Banc d'essai selon la revendication 1, caractérisé en ce qu'un élément de transmission de couple de rotation (92) et un élément de balayage (72, 74, 98) font partie du capteur de couple de rotation (24), l'élément de transmission de couple de rotation (92) étant placé, en vue de la transmission du couple de rotation, entre la jante (36) du rouleau et une position sur l'arbre (12), entre la jante (36) et le palier (18, 20), et l'élément de balayage (62, 74, 98) étant relié au régulateur (34).

3. Banc d'essai selon la revendication 2, caractérisé en ce que l'élément de liaison (42) contient l'élément de transmission de couple de rotation (92), tandis qu'une série de rayons (56) font partie de l'élément de transmission de couple de rotation (92).

4. Banc d'essai selon la revendication 3, caractérisé en ce que chacun desdits rayons (56) est souple en rotation dans la direction périphérique, tandis que ceux-ci sont sensiblement rigides en flexion, axialement et coaxialement, pendant l'entraînement du rouleau (10) par une roue de véhicule (22).

5. Banc d'essai selon la revendication 4, caractérisé en ce qu'au moins une bande de mesure d'allongement (62), qui est placée sur l'un des rayons (56), fait partie de l'élément de balayage.

6. Banc d'essai selon la revendication 4, caractérisé en ce qu'un capteur de distance, qui détecte les déplacements angulaires entre les extrémités extérieures des rayons (56) et de l'arbre (12), fait partie de l'élément de balayage (62).

7. Banc d'essai selon la revendication 2, caractérisé en ce qu'une partie (104d) de l'arbre (12d), entre le moyeu (38) et le palier (18, 20), fait partie de l'élément de transmission de couple de rotation (92).

8. Banc d'essai selon la revendication 7, caractérisé en ce que l'élément de balayage est un capteur de distance, qui détecte le déplacement angulaire entre les extrémités de la partie (104d) de l'arbre (12d).

9. Banc d'essai selon la revendication 7, caractérisé en ce qu'au moins une bande de mesure d'allongement, qui est montée sur la partie (104d) de l'arbre (12d), fait partie de l'élément de balayage.

10. Banc d'essai selon la revendication 2, caractérisé en ce que l'élément de transmission de couple de rotation (92) est fixé entre le moyeu (38) du rouleau et l'arbre (12).
